# EUROPÄISCHE PATENTANMELDUNG

(11) **EP 0 908 350 A2**
(43) Veröffentlichungstag der Anmeldung: **14.04.1999**
(21) Anmeldenummer: 98118887.3
(22) Anmeldetag: 06.10.1998
(51) Int. Cl.: B60N 2/04

(54) **Verstellmechanik für eine selbsthemmende Dreh-Verstellung eines Antriebs-Wirkteiles**

(30) Priorität: 10.10.1997 DE 19744726
(71) Anmelder: ISE Innomotive Systems Europe GmbH, 51702 Bergneustadt (DE)
(72) Erfinder: Lang, Jozef, 1131 Budapest (HU)
(74) Vertreter: Fuchs Mehler Weiss & Fritzsche

(57) **Zusammenfassung**

Auf vielen Gebieten der Technik ist eine feinstufige selbsthemmende Dreh-Verstellung einer Vorrichtung notwendig, beispielsweise die Verstellvorrichtung von Fahrzeugsitzen.

Es ist bekannt, diese Verstellvorrichtungen mit dem Abtriebs-Wirkteil (3) einer Verstellmechanik für eine feingestufte Drehverstellung des Abtriebs-Wirkteiles zu koppeln, welches selbsthemmend mit einem Hand-Stellrad (10) über eine Welle (2) gekoppelt ist.

Gemäß der Erfindung ist zwischen dem Abtriebs-Wirkteil (3) und dem Hand-Stellrad (10) eine in beiden Drehrichtungen wirkende, durch Betätigung des Hand-Stellrades entriegelbare Verklinkungs-Aordnung (4, 5, 6, 7) zur Feinverstellung des Abtriebs-Wirkteils (3) bei einer Betätigung des Hand-Stellrades (10) in der entriegelten Drehrichtung und zur Selbsthemmung des Abtriebs-Wirkteiles (3) gegenüber einer Betätigung in der verriegelten Gegendrehrichtung vorgesehen.

## Beschreibung

Die Erfindung bezieht sich auf eine Verstellmechanik für eine Dreh-Verstellung eines Abtriebs-Wirkteiles, das selbsthemmend mit einem Hand-Stellrad über eine Welle gekoppelt ist.

Eine derartige Verstellmechanik findet auf vielen Gebieten der Technik für stufenlose selbsthemmende Drehverstellungen Anwendung. Vorzugsweise dient sie als selbsthemmende Verstellmechanik für eine Verstellvorrichtung von Fahrzeugsitzen. Mit einem entsprechenden Mechanismus verbunden, dient sie dabei in erster Linie zum Neigungsverstellen, d.h. zum Anheben der Vorderkante des Sitzes, zur Höhenverstellung des Sitzes und zum Neigungsverstellen der Rückenlehne des Fahrzeugsitzes.

Es ist bekannt für stufenlose selbsthemmende Verstellmechaniken Zahnradtriebe mit einer aufwendigen Selbsthemmung vorzusehen.

Durch die DE 36 16 164 A1, die DE 37 41 740 A1, die DE 43 44 225 A1 sowie die EP 0 245 861 B1 sind Verstellmechaniken bekannt geworden, die mittels eines Handhebels schrittweise verstellbar sind. Diese Verstellmechaniken eignen sich jedoch nicht für eine feinfühlige Verstellung und weisen zudem überwiegend zahlreiche komplexe Teile auf, d.h. sie sind teuer in der Herstellung und aufwendig in der Montage.

Durch die DE 44 19 789 A1 ist eine weitere manuelle Betätigungsvorrichtung zur Betätigung einer Sitzhöhenverstellung bekannt geworden. Diese manuelle Betätigungsvorrichtung weist einen Freigabehebel zur Lösung einer Verriegelungsvorrichtung und einen Betätigungshebel zum Verdrehen einer Betätigungswelle auf. Um die zugehörige, von der Betätigungseinheit separate Sitzhöhen-Verstellvorrichtung zu betätigen, muß zunächst der Freigabehebel gegen den Betätigungshebel gedrückt werden, und sodann der Betätigungshebel verschwenkt werden. Dabei bestimmt die Winkelposition des Betätigungshebels die zugehörige Sitzhöhe. Jede Winkelposition des Betätigungshebels ist genau einer Sitzhöhe zugeordnet. Dies bedeutet, daß der Betätigungshebel mit einer einzigen Verschwenkung von einer Extremposition in die andere Extremposition den gesamten Hub der Sitzhöhen-Verstellvorrichtung abdeckt. Dabei ist im bekannten Fall der Schwenkbereich des Betätigungshebels auf weniger als 90° beschränkt. Dies bedeutet, daß mittels einer Viertelumdrehung der Betätigungswelle eine Sitzhöhen-Verstellung um etwa 5 cm eingestellt werden muß. Für eine solche Verstellung sind hohe Betätigungskräfte erforderlich, die nur durch einen langen Hebelarm verringert werden können. Eine Feineinstellung der Sitzhöhe ist auf diese Weise nur schwer möglich, da eine kleine Winkelverstellung des Betätigungshebels schon eine große Höhenverstellung des Sitzes zur Folge hat. Schließlich ist es auch von Nachteil, daß zur Einstellung der Sitzhöhe zwei Hebel zu betätigen sind, was eine koordinierte Bewegung des Fahrers erfordert. Zunächst ist nämlich der Freigabehel zu betätigen, danach, bei betätigtem Freigabehebel, der Betätigungshebel zu verschwenken.

In der älteren Patentanmeldung 196 33 011.4 wird eine manuelle Betätigungseinheit für eine Sitzverstellvorrichtung beschrieben, welche mit nur einem Handhebel und nur einer Schwenkbewegung dieses Handhebels zunächst eine Verriegelungsvorrichtung löst und sodann mittels einer Transportvorrichtung eine Drehbewegung einer Welle bewirkt. Nach erfolgtem Verdrehen der Welle um einen bestimmten Winkelbetrag rastet die Verriegelungsvorrichtung automatisch ein. Kehrt der Handhebel in eine durch Federvorspannung definierte Grundposition zurück, so wird die Transportvorrichtung durch eine Zwangsführung an einem Eingriff mit der Welle gehindert.

Diese Betätigungseinrichtung besteht aus einer Vielzahl von Teilen mit einer komplexen Funktion, was die Herstellung und Montage der Betätigungseinrichtung aufwendig und später im Gebrauch wartungsanfällig macht.

Der Erfindung liegt die Aufgabe zugrunde, die eingangs bezeichnete Verstellmechanik so auszubilden, daß nur wenige Einzelteile notwendig sind, ihre Funktion daher einfach ist, und eine nahezu wartungsfreie Verstellung in beiden Drehrichtungen mit einer sicheren Selbsthemmung ermöglicht wird.

Die Lösung dieser Aufgabe gelingt ausgehend von der eingangs bezeichneten Verstellmechanik gemäß der Erfindung dadurch, daß zwischen dem Abtriebs-Wirkteil und dem Hand-Stellrad eine in beiden Drehrichtungen wirkende, durch Betätigung des Hand-Stellrades entriegelbare Verklinkungs-Anordnung zur Einstellung des Abtriebs-Wirkteiles bei einer Betätigung des Hand-Stellrades in der entriegelten Drehrichtung und zur Selbsthemmung des Abtriebs-Wirkteiles gegenüber einer Betätigung in der verriegelten Gegendrehrichtung vorgesehen ist.

Die Verklinkungsanordnung gewährleistet eine einfache Fein-Verstellung des Wirkteiles in beiden Drehrichtungen und gewährleistet in der Grundstellung unabhängig von der Lastveränderung jeweils in der sperrenden Gegenrichtung eine sichere Verriegelung des am Abtriebs-Wirkteiles angeschlossenen Mechanismus.

Die erfindungsgemäße Verstellmechanik besteht ferner aus wenigen Einzelteilen, ihre Funktion ist einfach und wartungsfrei; ferner kann sie für mehrere verschiedene stufenlose Verstellaufgaben verwendet werden, z.B. zum Neigungsverstellen von Fahrzeugsitzen, d.h. zum Anheben der Vorderkante des Sitzkissens, zum Höhenverstellen des Sitzes, zum Neigungsverstellen der Rückenlehnen, usw..

Die Verklinkungs-Anordnung kann auf verschiedene Weise konstruktiv ausgestaltet werden.

Gemäß einer Weiterbildung der Erfindung ist die Verklinkungs-Anordnung durch eine auf der Welle befestigte, feingestufte Dreh-Klinkenanordnung mit mindestens einer in der Grundstellung der Verstellmechanik selbsttätig vertastenden Klinke gebildet, die im entriegelbaren Wirkeingriff mit dem Hand-Stellrad steht.

Diese Dreh-Klinkenanordnung ermöglicht eine besonders einfache Ausbildung der Verklinkungs-Anordnung mit wenigen Teilen bei einer sicheren Selbsthemmung.

Gemäß einer weiteren Ausgestaltung der Erfindung besteht eine spezielle, vorteilhafte Konstruktion der Dreh-Klinkenanordnung darin, daß auf der Welle eine Zahnscheibe mit Zahnlücken als Dreh-Klinkenanordnung befestigt und im vorgegebenen Abstand zu der Welle, die Klinke mit einem Schließriegel und einem Öffnungsnocken ortsfest mittels einer Achse drehbar und durch eine Schließfeder vorgespannt gelagert ist, derart, daß sie im verriegelten Zustand mit ihrem Schließriegel in die jeweilige Zahnlücke eingreift, sowie darin, daß auf der Welle eine mit dem Hand-Stellrad verbundene Führungsscheibe mit einer im Wirkeingriff mit der Führungsnocke der Klinke stehenden Führungsbahn für eine entriegelbare Betätigung der Klinke in Verbindung mit Mitnehmermitteln zum Verdrehen der Zahnscheibe mit der Welle und dem Abtriebs-Wirkteil gelagert ist, sowie darin, daß eine in Wirkverbindung mit der Zahnscheibe und der Führungsscheibe stehende Feder zur Vorgabe der Grundstellung vorgesehen ist.

Bei dieser Ausgestaltung der Erfindung, bei der auf der Welle des die Verstellung des angeschlossenen Mechanismus bewirkenden Abtriebs-Teiles eine Zahnscheibe befestigt ist, greift in deren Zahnlücken ein in beiden Richtungen verklinkender Schließriegel ein. Die Klinke ist gegenüber der Zahnscheibe außermittig gelagert und zwar auf die Weise, daß die beidseitige Verriegelungsfunktion gesichert ist. Die Klinke wird durch die Schließfeder dazu gezwungen, daß ihr Schließriegel immer wieder in die Zahnlücke zurückgeführt wird. Der Schließriegel der Klinke und die Zahnlücke der Zahnscheibe, sowie die Lage des Drehpunktes der Klinke sind so gestaltet, daß bei Einwirkung eines vom Abtriebs-Wirkteiles kommenden und auf die Zahnscheibe wirkenden Kraftmomentes beliebiger Richtung die die Klinke gegen die Federkraft anhebende Kraftkomponente kleiner ist, als die zwischen dem Schließriegel und den Anschlußflächen der Zahnlücke auftretende Reibkraft, d.h. der Schließriegel der Klinke kann die Zahnlücke der Zahnscheibe nur unter Einwirkung einer externen Kraft verlassen. Zum Aufbringen dieser Kraft, d.h. zum Anheben der Klinke und damit zum Lösen der Verriegelungs-Anordnung dient eine auf der Welle der Zahnscheibe gelagerte, und am Hand-Stellrad befestigte oder mit diesem aus einem Stück gefertigte Führungsscheibe. Bei der Verdrehung des Hand-Stellrades bzw. der Führungsscheibe in beliebiger Richtung wird die auf der Führungsscheibe ausgebildete Führungsbahn den Schließriegel der Klinke aus der Zahnlücke der Zahnscheibe herausheben. Dabei schlägt ein auf der Zahnscheibe befestigter Mitnehmerbolzen auf die Seitenfläche einer in der Führungsscheibe befindlichen Öffnung auf und verdreht über die Zahnscheibe deren Welle und das auf der Welle befestigte Abtriebs-Wirkteil. Die zwischen dem Hand-Stellrad und der Zahnscheibe befindliche vorgespannte Feder gewährleistet, daß die Zahnscheibe und die Führungsscheibe zueinander wieder in ihre alte Grundstellung zurückgehen.

Bei einer zweiten Ausführungsform der erfindungsgemäßen Verstellmechanik sind zur Verriegelung zwei Klinken vorgesehen, und zwar auf die Weise, indem in der Grundstellung die eine Klinke in geschlossener und die andere Klinke in einer geöffneten Stellung ist.

Auch bei dieser Variante dient zur Funktion der Verstellmechanik und zum Lösen der Verriegelung ein Hand-Stellrad und eine daran befestigte oder damit aus einem Stück gefertigte gemeinsame Führungsscheibe. Diese Ausführungsform ermöglicht eine sehr feinfühlige Verstellung des Abtrieb-Wirkteiles.

Bei einer dritten Ausführungsform der Erfindung sind zur Verriegelung zwei in je einer Richtung schließende Klinken eingebaut. Auch bei dieser Variante dient zur Funktion der Verstellmechanik und zum Lösen der Verriegelung das Hand-Stellrad und eine damit befestigte oder damit aus einem Stück gefertigte gemeinsame Führungsscheibe.

Weitere Ausgestaltungen und Vorteile der Erfindung ergeben sich anhand der Beschreibung der in den Zeichnungen dargestellten Ausführungsformen der Erfindung.

Es zeigen:
- Fig. 1 -4: in vier jeweils bezeichneten Schnittansichten eine erste Ausführungsform der erfindungsgemäßen Verstellmechanik mit nur einer Klinke,
- Fig. 5: in einer vereinfachten Schnittdarstellung analog Fig. 2 eine zweite Ausführungsform der Verstellmechanik mit zwei alternativ schließenden Klinken, und
- Fig. 6: in einer weiteren vereinfachten Schnittansicht entsprechend Fig. 2 eine dritte Ausführungsform der Verstellmechanik mit zwei je in eine Richtung verriegelnden Klinken.

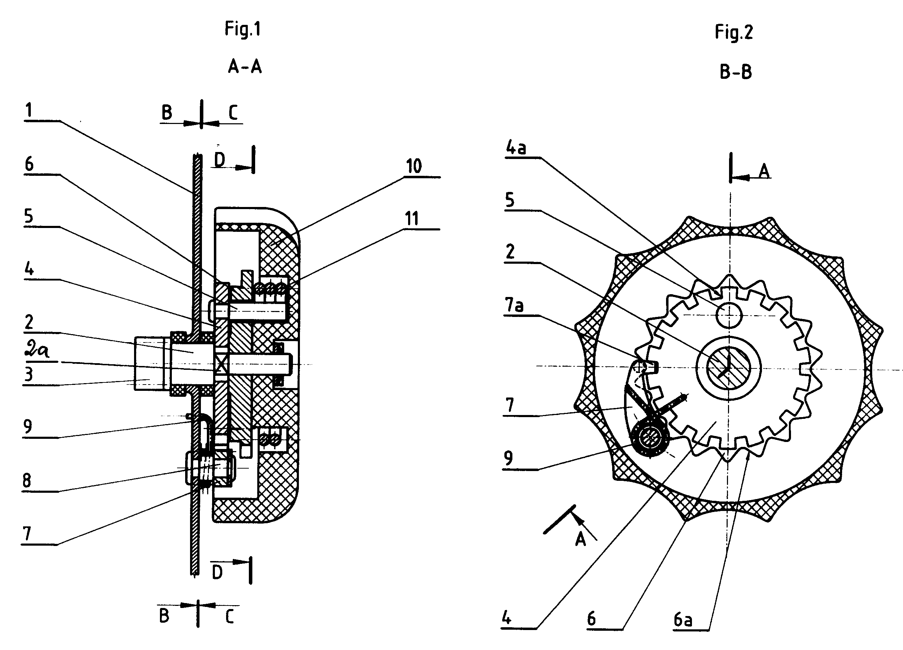

In den Fig. 1 bis 4 ist in verschiedenen Schnittansichten der Ruhezustand einer ersten Ausführungsform der erfindungsgemäßen Verstellmechanik dargestellt.

In einer feststehenden Grundplatte 1 ist eine Welle 2 gelagert, die am abtriebsseitigen Ende ein Abtriebs-Wirkteil, in diesem Beispiel in Form eines Zahnrades 3, aufweist. Dieses Zahnrad 3 ist auf der Welle 2 als separates Teil fest angebracht oder einstückig an dieser angeformt. Dieses Zahnrad 3 steht (nicht dargestellt) im Wirkeingriff mit einem Gegenzahnrad oder einem Zahnsegmentbogen oder einer Zahnstange einer zu betätigenden Verstellvorrichtung. Diese Verstellvortichtung ist vorzugsweise eine solche für Sitze in einem Kraftfahrzeug, insbesondere zum Neigungs- und Höhenverstellen von Sitzkissen sowie zur Neigungsverstellung der Rückenlehne.

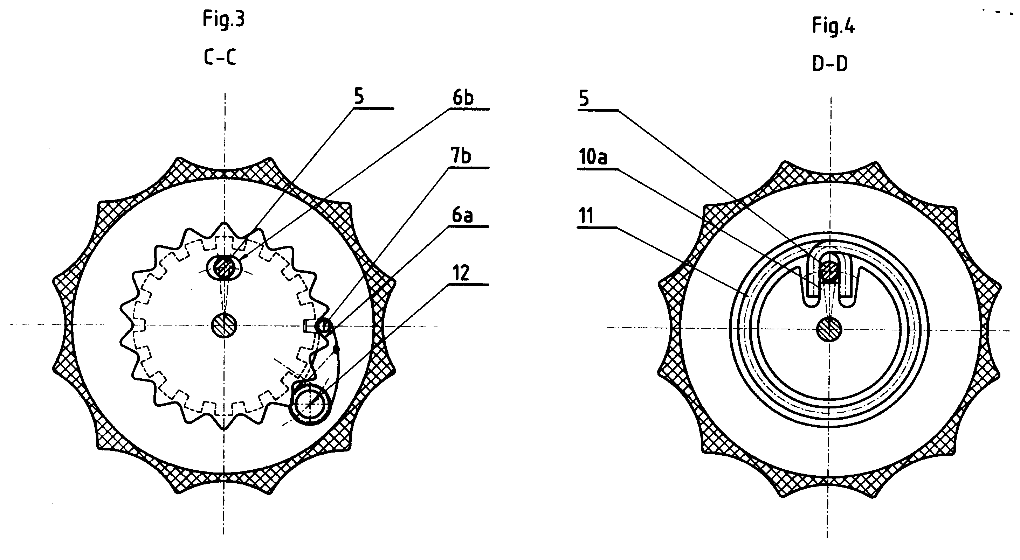

Die Welle 2 setzt sich über einen Vierkant 2a fort mit einem durchmesserschmäleren Abschnitt, auf dem ein Hand-Stellrad 9 gelagert ist. Auf der Welle 2 ist ferner im Bereich des Vierkantes 2a eine Zahnscheibe 4 mit Zahnlücken 4a fest angeordnet. Auf der Grundplatte 1 ist eine Klinke 7 mit einem Schließriegel 7a und einem bolzenförmigen Absatz 7b (Fig. 3) mittels eines Bolzens 8 um einen Drehpunkt 12 drehbeweglich gelagert. Um den Bolzen 8 ist eine Schließfeder 9 geschlungen, die in Wirkeingriff mit der feststehenden Grundplatte 1 und der Klinke 7 steht, derart, daß im dargestellten Ruhezustand die Schließfeder 9 den Schließriegel 7a der Klinke 7 in beiden Drehrichtungen das Verdrehen der Welle 2 sowie der Zahnscheibe 4 und des Zahnrades 3 verhindert.

Die Verstellmechanik weist ferner eine auf der Welle 2 drehbar gehalterte Führungsscheibe 6 (Fig. 1) mit einer wellenförmig gezackten Umfängslinie als Führungsbahn 6a für den Absatz 7b der Klinke 7 und mit einer Langloch-Öffnung 6b (Fig. 3) auf, die entweder als separates Teil mit dem Hand-Stellrad 10 verbunden oder einstückig an diesem angeformt ist.

Ferner ist ein an der Zahnscheibe 4 angebrachter Mitnehmerbolzen 5 vorgesehen, der die Langloch-Öffnung 6b in der Führungsscheibe 6 durchdringt und in einer Ausnehmung des Hand-Stellrades 10, die einen vorstehenden Anschlagabsatz 10a besitzt, mit den abgekröpften Enden einer die Mittelstellung der Verstellmechanik sichernden Feder 11 in Wirkverbindung steht (Fig. 4).

Die Verstellmechanik kann mit dem Hand-Stellrad 10 in beiden Drehrichtungen betätigt werden. Dabei kam das auf der Welle 2 gelagerte Handrad 10 gegen die Kraft der Feder 11 gegenüber der Zahnscheibe 4 bis zum entsprechenden Maße der Langloch-Öffnung 6b verdreht werden. Dabei hebt die Führungsbahn 6a der Führungsscheibe 6 gegen die Schließfeder 9 den Schließriegel 7a der auf der Grundplatte 1 gelagerten Klinke 7 aus der Zahnlücke 4a der Zahnscheibe 4, und zwar mit Hilfe des an der Klinke 7 gebildeten Absatzes 7b - der zweckmäßigerweise gemäß den Zeichnungen als Bolzen ausgeführt ist -. Mit dem Auftreffen des auf der Zahnscheibe 4 befestigten Mitnehmerbolzens 5 auf die Öffnung 6b hebt sich gleichzeitig der Schließriegel 7a der Klinke 7 völlig aus der Zahnlücke 4a der Zahnscheibe 4 heraus. Dadurch löst sich die Verriegelung und das Hand-Stellrad 10 kann über den Anschlag des Mitnehmerbolzens 5 an dem Rand der Öffnung 6b das auf der Welle 2 befindliche Zahnrad 3 feinfühlig verdrehen. Das Lösen der Verriegelung, sowie die Funktion der Verstellmechanik ist in beiden Verriegelung, sowie die Funktion der Verstellmechanik ist in beiden Drehrichtungen gleich. Beim Loslassen des Hand-Stellrades 10 stellt die Feder 11 mit Hilfe des sich auf der Zahnscheibe 4 befindlichen Mitnehmerbolzens 5 und dem am Hand-Stellrad 10 ausgebildeten Anschlagabsatz 10a des Hand-Stellrades 10 und die Führungsbahn 6a in bezug auf die Zahnscheibe 4 in seine Ruhestellung gemäß den Fig. 1 bis 4 zurück. Dabei wird mit der Verdrehung der Führungsbahn 6a die Verdrehrichtung der Klinke 7 frei. Die Schließfeder 9 bemüht sich, die Klinke 7 in die Ruhestellung zurückzustellen, was auch mit der Verdrehung der Zahnscheibe 4 erfolgt, indem der Schließriegel 7a unter der Wirkung der Federkraft in die Zahnlücke 4a gleitet.

Damit ist die Verstellmechanik wieder in ihre Ruhestellung, d.h. im Verriegelungszustand.

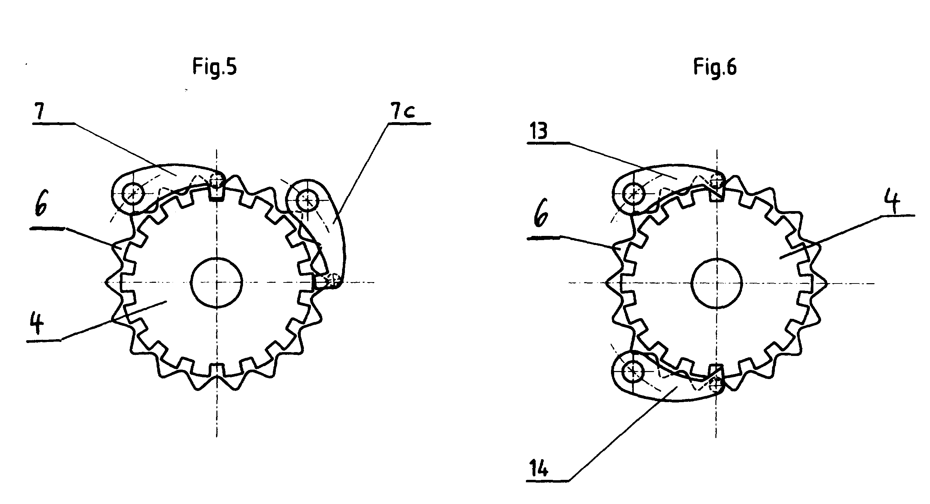

Die Fig. 5 zeigt eine zweite Ausführungsform der erfindungsgemäßen Verstellmechanik. In dieser Ausführungsform dienen zwei Klinken 7, 7c zur Verriegelung der Zahnscheibe 4, die so angeordnet sind, daß während die eine Klinke 7c geöffnet ist, d.h. ihr Schließriegel auf einem Zahn aufliegt, die andere Klinke 7 geschlossen bleibt, weil ihr Schließriegel in einer Zahnlücke ruht. Mit dieser Anordnung kann eine bessere Feineinstellung erreicht werden, und die Schließung während des Betriebes ist auch sicherer. Beide Klinken werden von derselben Führungsscheibe 6 gesteuert. Im übrigen stimmt das Funktionsprinzip mit demjenigen nach Fig. 1 überein.

Die Fig. 6 zeigt eine dritte Ausführungsform der erfindungsgemäßen Verstellmechanik. Bei dieser Ausführung dienen nur in eine Richtung verriegelnde Klinken 13, 14 zur Verriegelung der Zahnscheibe 4. Auch hier stimmt im übrigen die Funktion mit derjenigen gemäß der beschriebenen Ausführung nach Fig. 1 überein.

Wirkteil an den Verstellmchanismus des Sitzes im Falle einer Anwendung bei Fahrzeugsitzen anschließbar sind.

### Bezugszeichenliste:

- 1: Grundplatte
- 2: Welle
- 3: Zahnrad
- 4: Zahnscheibe
- 4a: Zahnlücke
- 5: Mitnehmerbolzen
- 6: Führungsscheibe
- 5a: Führungsbahn
- 6b: Öffnung
- 7: Klinke
- 7a: Schließriegel
- 7b: Absatz
- 7c: offene Klinke
- 8: Bolzen
- 9: Schließfeder
- 10: Hand-Stellrad
- 10a: Anschlagasatz
- 11: Feder
- 12: Klinkendrehpunkt
- 13: in der einen Richtung schließende Klinke
- 14: in der anderen Richtung schließende Klinke

## Patentansprüche

1. Verstellmechanik für eine Dreh-Verstellung eines Abtriebs-Wirkteiles (3), das selbsthemmend mit einem Hand-Stellrad (10) über eine Welle (2) gekoppelt ist, dadurch gekennzeichnet, daß zwischen dem Abtriebs-Wirkteil (3) und dem Hand-Stellrad (10) eine in beiden Drehrichtungen wirkende, durch Betätigung des Hand-Stellrades (10) entriegelbare Verklinkungs-Anordnung (4, 5, 6, 7) zur Feineinstellung des Abtriebs-Wirkteiles (3) bei einer Betätigung des Hand-Stellrades (10) in der entriegelten Drehrichtung und zur Selbsthemmung des Abtriebs-Wirkteiles (3) gegenüber einer Betätigung der Welle in der vertiegelten Gegendrehrichtung vorgesehen ist.

2. Verstellmechanik nach Anspruch 1, dadurch gekennzeichnet, daß die Verklinkungs-Anordnung durch eine auf der Welle (2) befestigte feingestufte Dreh-Klinkenanordnung (4, 4a) mit mindestens einer in der Grundstellung der Verstellmechanik selbsttätig verrastenden Klinke (7, 7c; 13, 14) gebildet ist, die im entriegelbaren Wirkeingriff mit dem Hand-Stellrad (10) steht.

3. Verstellmechanik nach Anspruch 2, dadurch gekennzeichnet, daß auf der Welle (2) eine Zahnscheibe (4) mit Zahnlücken (4a) als Dreh-Klinkenanordnung befestigt und im vorgegebenen Abstand zu der Welle (2) die Klinke (7, 7c; 13, 14) mit einem Schließriegel (7a) und einem Öffnungsnocken (7b) ortsfest mittels einer Achse (8, 12) drehbar und durch eine Schließfeder (9) vorgespannt gelagert ist, derart, daß sie im vertiegelten Zustand mit ihrem Schließriegel (7a) in die jeweilige Zahnlücke (4a) eingreift, daß auf der Welle (2) eine mit dem Hand-Stellrad (10) verbundene Führungsscheibe (6) mit einer im Wirkeingriff mit der Führungsnocke (7b) der Klinke (7) stehenden Führungsbahn (6a) für eine entriegelbare Betätigung der Klinke (7) in Verbindung mit Mitnehmermittel (5, 6b, 10a) zum Verdrehen der Zahnscheibe (4) mit der Welle (2) und dem Abtriebs-Wirkteil (3) gelagert ist, und daß eine Wirkverbindung mit der Zahnscheibe (4) und der Führungsscheibe (6) stehende Feder (11) zur Vorgabe der Grundstellung der Verstellmechanik vorgesehen ist.

4. Verstellmechanik nach Anspruch 3, mit einem Zahnrad (3) als Abtriebs-Wirkteil, dadurch gekennzeichnet, daß eine gemeinsame Welle (2) vorgesehen ist, auf der das Zahnrad (3) und die Zahnscheibe (4) befestigt, sowie die Führungsscheibe (6) und das Hand-Stellrad (10) gelagert sind.

5. Verstellmechanik nach Anspruch 3 oder 4, dadurch gekennzeichnet, daß das Hand-Stellrad (10) und die daran befestigte oder mit ihm aus einem Stück gefertigte Führungsscheibe (6) in beiden Drehrichtungen beliebig verdrehbar ausgebildet sind.

6. Verstellmechanik nach einem der Ansprüche 3 bis 5, dadurch gekennzeichnet, daß der Schließriegel (7a) der die Verriegelung ausführenden Klinke (7) und die Zahnlücke (4a) der Zahnscheibe (4) selbsthemmend gestaltet sind.

7. Verstellmechanik nach einem der Ansprüche 3 bis 6, dadurch gekennzeichnet, daß zwei Klinken (7, 7c) vorgesehen sind, die so in bezug auf die Zahnscheibe (4) angeordnet sind, daß in der Grundstellung sich die eine Klinke (7) in Schließstellung und die andere Klinke (7c) in offener Stellung befinden.

8. Verstellmechanik nach Anspruch 7, dadurch gekennzeichnet, daß beiden Klinken (7, 7c) eine gemeinsame Führungsscheibe (6) zugeordnet ist.

9. Verstellmechanik nach einem der Ansprüche 3 bis 6, dadurch gekennzeichnet, daß nur in einer Richtung schließende Klinken (13, 14) vorgesehen sind.

10. Verstellmechanik nach Anspruch 9, dadurch gekennzeichnet, daß allen Klinken (13, 14) eine gemeinsame Führungsscheibe (6) zugeordnet ist.

11. Verstellmechanik nach einem der Ansprüche 1 bis 10, dadurch gekennzeichnet, daß sie als vormontierte Einheit ausgebildet ist, die nachträglich mit ihrem Abtriebs-Wirkteil (3) an dem Verstellmechanismus des zu betätigenden Teiles anschließbar ist.
